# EUROPÄISCHE PATENTSCHRIFT

(11) **EP 4 162 332 B1**
(45) Veröffentlichungstag und Bekanntmachung des Hinweises auf die Patenterteilung: **06.11.2024**
(21) Anmeldenummer: 21742328.4
(22) Anmeldetag: 02.07.2021
(51) Int. Cl.: G05B 19/4093

(54) **VORRICHTUNG UND VERFAHREN ZUM BEARBEITEN EINES WERKSTÜCKS**
DEVICE AND METHOD FOR MACHINING A WORKPIECE
DISPOSITIF ET PROCÉDÉ D'USINAGE D'UNE PIÈCE

(30) Priorität: 13.08.2020 EP 20190904
(43) Veröffentlichungstag der Anmeldung: 12.04.2023
(73) Patentinhaber: Siemens Aktiengesellschaft, 80333 München (DE)
(72) Erfinder: HAMM, Carsten, 91330 Eggolsheim (DE)
(74) Vertreter: Siemens Patent Attorneys
(86) Internationale Anmeldenummer: PCT/EP2021/068303
(87) Internationale Veröffentlichungsnummer: WO 2022/033766

(56) Entgegenhaltungen:
- EP-B1- 2 237 122
- WO-A2-2014/095439
- DE-A1- 102016 125 749
- KR-A- 20180 092 657

## Beschreibung

Die Erfindung betrifft ein Verfahren zum Bearbeiten eines Werkstücks sowie eine Vorrichtung zum Bearbeiten eines Werkstücks. Insbesondere betrifft die Erfindung das Bearbeiten eines Werkstücks mittels einer Werkzeugmaschine, einer Produktionsmaschine oder eines Industrieroboters.

### Stand der Technik

Beim Bearbeiten eines Werkstücks kann sich die Form des Werkstücks ändern, sodass sich das Trägheitsmoment des Werkstücks während der Bearbeitung des Werkstücks verändert. Ein derartiger Effekt kann selbst dann auftreten, wenn sich die Masse des Werkstücks selbst nicht verändert, etwa falls sich die äußere Geometrie des Werkstücks durch Umformen ändert oder falls die Dichte des Werkstücks verändert wird. Auch durch Umwandlungsvorgänge des Materials des Werkstücks, etwa durch Anwenden von Druck oder Temperatur oder durch chemische Prozesse, kann sich die Materialverteilung des Werkstücks ändern, sodass das Trägheitsmoment des Werkstücks während der Bearbeitung nicht konstant ist.

Zusätzlich oder auch alternativ kann sich durch Bearbeitungsvorgänge die Masse des Werkstücks ändern. Nur beispielhaft sei hierbei die spanende Bearbeitung im Flugzeugbau erwähnt, wobei bei Strukturbauteilen bis zu 90 Masseprozent an Spänen anfallen können, sodass die Masse während der Bearbeitung stark abnimmt.

Die Masse kann jedoch nicht nur abnehmen, sondern bei additiven Fertigungsverfahren auch zunehmen. Beispiele für derartige Verfahren sind Lasersintern, Laserstrahlschmelzen und Elektronenstrahlschmelzen.

Die Masse bzw. das Trägheitsmoment des Werkstücks spielen bei der Steuerung bzw. Regelung insofern eine Rolle, dass bestimmte Steuerungsparameter hiervon abhängig sein können. Beispielsweise können Parameter der Bewegungsführung unter Berücksichtigung einer maximal zulässigen Beschleunigung ausgewählt werden, welche wiederum von der maximal auftretenden Masse abhängt. Bestimmte Regelungsparameter, etwa eine Drehmomentvorsteuerung, ein Sollwertfilter oder dergleichen sind ebenfalls von der Masse bzw. von dem Trägheitsmoment des Werkstücks abhängig.

Die kinematische Struktur der Bearbeitungsmaschine entscheidet, ob während der Bearbeitung des Werkstücks das Werkstück oder das Werkzeug oder beide bewegt werden. Abhängig davon sind für Bewegungen in den bis zu drei translatorischen und den bis zu drei rotatorischen Freiheitsgraden die Masse bzw. das Trägheitsmoment des Werkstücks bedeutsam oder nicht. Beispielsweise kann das Werkstück in X-Richtung und in Y-Richtung bewegt werden, während das Werkzeug in Z-Richtung bewegt wird. Die Masse des Werkstücks ist dann für Steuerungsparameter in X-Richtung und Y-Richtung relevant, nicht jedoch für Steuerungsparameter in Z-Richtung.

Die Steuerungsparameter können defensiv eingestellt werden, indem je nach Anwendungsfall die schwerste bzw. die leichteste während der Bearbeitung auftretende Masse die zutreffende Einstellung festlegt. Die Steuerungsparameter sind dadurch statisch vorgegeben und ändern sich während der Bearbeitung des Werkstücks nicht.

Weiter kann auch ein Anwender die Masse bzw. das Trägheitsmoment des Werkstücks zu ausgewählten Zeitpunkten während der Verarbeitung aktualisieren und eine Neuberechnung bzw. Neubelegung der Steuerungsparameter triggern. Hierzu ist es erforderlich, dass die Informationen über die Masse bzw. das Trägheitsmoment vorab ermittelt werden und somit als äußere Eingangsgröße dienen.

Weiter kann die aktuelle Trägheit mittels eines Online-Algorithmus direkt während des Bearbeitens des Werkstücks berechnet werden. Anhand spezieller Verhältnisse, etwa gleichförmig beschleunigter Phasen während der Bearbeitung oder separater Testfahrten kann das Verhältnis von Kraft F zu Beschleunigung a gemessen werden. Hieraus kann über die klassische Beziehung F = m.a die momentane Masse des Werkstücks geschätzt werden. Gleichförmig beschleunigte Phasen in der Bearbeitung sind jedoch selten. Separate Testfahrten benötigen hingegen zusätzliche Zeit und zusätzlichen Aufwand.

Aus der EP3518051A1 ist ein Ermittlungsverfahren für eine Strategie zur Optimierung des Betriebs einer Bearbeitungsmaschine bekannt, wobei eine Bewegungssteuerung der Bearbeitungsmaschine unter Verwendung von Parametern Folgen von Lagesollwerten ermittelt und je eine der Folgen von Lagesollwerten einer jeweiligen Antriebssteuerung vorgibt, wobei die Antriebssteuerungen unter Verwendung von Parametern Ansteuersignale für eine von einem jeweiligen Antrieb angetriebene Mechanik einer jeweiligen lagegeregelten Achse ermitteln und die Ansteuersignale an den jeweiligen Antrieb ausgeben. Dabei nimmt eine Recheneinrichtung über eine Benutzerschnittstelle von einem Benutzer Eigenschaften eines mittels der Bearbeitungsmaschine zu bearbeitenden Werkstücks, eine Beschreibung der Art der vorzunehmenden Bearbeitung, eine Beschreibung der Leistungsfähigkeit der Bearbeitungsmaschine und ein Optimierungsziel entgegen und ermittelt anhand der entgegengenommenen Daten unter Verwendung interner Ermittlungsregeln,
-- welche Parameter der Bearbeitungsmaschine zur Optimierung des Betriebs variiert werden sollen,
-- welche Parameter zur Optimierung des Betriebs variiert werden sollen,
-- mit welchen Messgrößen die Bearbeitungsmaschine oder einzelne Achsen im Rahmen von Messungen betrieben werden sollen, um sinnvoll auswertbare Messergebnisse zu erhalten, und
-- welche Kriterien zur Bewertung der anhand der Messungen ermittelten Messergebnisse verwendet werden können, und gibt die ermittelten Parameter, Messgrößen und Kriterien an den Benutzer aus.

Aus der DE102015105999A1 sind eine Vorrichtung sowie ein Verfahren zur materialabtragenden Bearbeitung eines Werkzeuges bekannt. Das Werkzeug wird zunächst mittels einer Messeinheit dreidimensional vermessen und daraus ein dreidimensionales virtuelles Werkzeugmodell erzeugt. Dieses virtuelle Werkzeugmodell wird mit einer Referenzkontur eines jeweiligen Werkzeugdatensatzes verglichen. Wurde eine Übereinstimmung festgestellt, wird ein dem Werkzeugdatensatz zugeordnetes Bearbeitungsprogramm ausgewählt und eine Sollkontur durch Einpassen der Referenzkontur in das dreidimensionale virtuelle Werkzeugmodell ermittelt. Auf Basis dieser Sollkontur kann anschließend das Werkzeug bearbeitet werden.

Aus der US2020064809A1 sind Verfahren, Systeme und Vorrichtungen, einschließlich mediencodierter Computerprogrammprodukte, bekannt für die computergestützte Konstruktion und Herstellung von physischen Strukturen unter Verwendung subtraktiver Fertigungssysteme und -techniken. Das Verfahren umfasst:
-- Erhalten einer Endbearbeitungswerkzeugwegspezifikation für eine dreidimensionale Geometrie eines Teils;
-- Erzeugen einer 3D-Geometrie eines Modells einer halbfertigen Struktur gemäß einer Computersimulation von Durchbiegungen, die ein Werkstück erfährt, wenn das Ausgangsmaterial aus dem Werkstück unter Verwendung der Endbearbeitungswerkzeugwegspezifikation geschnitten wird;
-- Erstellen einer Vorbearbeitungswerkzeugwegspezifikation für die halbfertige Struktur; und
-- Bereitstellen der Vorbearbeitungswerkzeugwegspezifikation zur Verwendung bei der Bearbeitung des Teils durch Wegschneiden eines ersten Abschnitts des Ausgangsmaterials unter Verwendung der Vorbearbeitungswerkzeugwegspezifikation, um die halbfertige Struktur zu bilden, gefolgt von Durchführen eines Endbearbeitungsvorgangs für die halbfertige Struktur durch Wegschneiden eines zweiten Teils des Ausgangsmaterials, um das Teil zu bilden.

Aus der WO2014/095439 A2 ist ein Verfahren zum materialabtragenden Bearbeiten eines an einer Werkstückaufnahme eingespannten Werkstücks mittels einer Werkzeugmaschine, insbesondere mittels einer Stanz- oder Stanz-/Laser-Kombimaschine, bekannt, bei dem ein Näherungswert der aktuellen Werkstückmasse durch folgende Schritte ermittelt wird:
- Erstellen eines dynamischen Modells des durch das Werkstück, die Werkstückaufnahme und den elektromotorischen Antrieb gebildeten Antriebsstrangs;
- Festlegen eines Anfangs-Näherungswertes der aktuellen Werkstückmasse;
- Simulieren der Soll-Werkstückbewegung anhand des Modells basierend auf dem Näherungswert der aktuellen Werkstückmasse;
- Ermitteln eines simulierten Soll-Erregerstroms des elektromotorischen Antriebs basierend auf der simulierten Soll-Werkstückbewegung;
- Ermitteln einer Erregerstrom-Abweichung durch Vergleichen des simulierten Soll- Erregerstroms mit einem während der Durchführung der Soll-Werkstückbewegung erfassten Ist-Erregerstroms des elektromotorischen Antriebs;
- Berechnen eines neuen Näherungswertes der aktuellen Werkstückmasse basierend auf der ermittelten Erregerstrom-Abweichung und
- wiederholtes Durchführen der letzten vier Schritte, bis die Erregerstrom-Abweichung einen definierten Abbruchwert unterschreitet.

Aus der DE102016125749A1 ist ein Überwachungsverfahren für eine numerisch gesteuerte Werkzeugmaschine, insbesondere eine Fräsdrehmaschine mit mindestens einem rotatorischem Werkstückantrieb und einer trennender Schutzeinrichtung bekannt, wobei eine Ist-Geometrie eines Werkstücks und/oder eine Ist-Masseverteilung des Werkstücks bestimmt und mit einem vorgegebenen Referenzwert einer zulässigen Geometrie und/oder einer zulässigen Masseverteilung verglichen wird. Die Überwachungseinrichtung weist wenigstens ein Mittel zur Messung der Masse eines auf einem Werkstücktisch aufgespannten Werkstücks und/oder wenigstens einen Sensor zur Erfassung der Werkstückgeometrie auf.

Aus der EP2237122B1 ist ein Verfahren zum Erzeugen von Steuerdaten zum Steuern eines vorgegebenen Werkzeugs an einer Werkzeugmaschine zum Bearbeiten eines eingespannten Werkstücks von einem Rohteil in ein Fertigteil durch Zerspanen bekannt, umfassend die Verfahrensschritte:
- Erzeugen von Bahndaten, die angeben, welche Bearbeitungsbahn beziehungsweise Bearbeitungsbahnen ein mindestens ein vorgegebenes Werkzeug mit welcher Vorschubgeschwindigkeit und mit welcher Werkzeugorientierung relativ zum Werkstück zum Abtragen von Material des Werkstücks durch Vorschub abfahren soll;
- Erzeugen von Bearbeitungsgeometrie-Modelldaten einer Bearbeitungsgeometrie des Werkstücks, die den momentanen Abtragszustand des Werkstücks zu einem bestimmten Bearbeitungszeitpunkt beschreiben;
- Bereitstellen von Fertigteilgeometrie-Modelldaten, die eine Fertigteilgeometrie des Werkstücks beschreiben;
- Erzeugen von Differenzgeometrie-Modelldaten anhand eines Vergleichs der Bearbeitungsgeometrie-Modelldaten mit den Fertigteilgeometrie-Modelldaten zum Bestimmen einer Differenzgeometrie zwischen der Bearbeitungsgeometrie und der Fertigteilgeometrie;
- Erzeugen von Bahndaten einschließlich Festlegen einer Bearbeitungsbahn, die ein vorgegebenes Werkzeug zum Abtragen von Material der bestimmten Differenzgeometrie des Werkstücks durch Vorschub abfahren soll, anhand der erzeugten Differenzgeometrie-Modelldaten.

Es ist eine objektive Aufgabe der vorliegenden Erfindung, die Bearbeitung des Werkstücks effizienter durchzuführen.

### Zusammenfassung der Erfindung

Die Erfindung stellt ein Verfahren zum Bearbeiten eines Werkstücks sowie eine Vorrichtung zum Bearbeiten eines Werkstücks den Merkmalen der unabhängigen Patentansprüche bereit. Bevorzugte Ausführungsformen sind Gegenstand der jeweiligen Unteransprüche.

Die Erfindung ermöglicht eine effiziente Bearbeitung des Werkstücks, indem Steuerungsparameter dynamisch während der Bearbeitung des Werkstücks angepasst werden. Hierzu werden die momentane Masse des Werkstücks und/oder das momentane Trägheitsmoment des Werkstücks berücksichtigt.

Gemäß einem ersten Aspekt betrifft die Erfindung demnach ein Verfahren zum Bearbeiten eines Werkstücks. Ein geometrisches Modell des zu bearbeitenden Werkstücks wird bereitgestellt. Das Werkstück wird mittels einer Bearbeitungsmaschine bearbeitet, wobei die Bearbeitungsmaschine mittels mindestens eines Steuerungsparameters gesteuert wird. Der mindestens eine Steuerungsparameter wird während des Bearbeitens des Werkstücks in Abhängigkeit von einer momentanen Masse des Werkstücks und/oder in Abhängigkeit von einem momentanen Trägheitsmoment des Werkstücks angepasst, wobei die momentane Masse des Werkstücks und/oder das momentane Trägheitsmoment des Werkstücks anhand des geometrischen Modells bestimmt werden, wobei das Bestimmen der momentanen Masse des Werkstücks und/oder des momentanen Trägheitsmoments des Werkstücks in Abhängigkeit von einer Dichte des Werkstücks sowie von einer momentanen Form des Werkstücks erfolgt, wobei die momentane Form des Werkstücks anhand des geometrischen Modells des Werkstücks ermittelt wird und wobei das geometrische Modell anhand einer Bearbeitungssimulation aktualisiert wird.

Gemäß einem zweiten Aspekt betrifft die Erfindung demnach eine Vorrichtung zum Bearbeiten eines Werkstücks, mit einer Bearbeitungsmaschine und einer Steuerungseinrichtung. Die Bearbeitungsmaschine bearbeitet das Werkstück. Die Steuerungseinrichtung steuert die Bearbeitungsmaschine zum Bearbeiten des Werkstücks mittels mindestens eines Steuerungsparameters. Die Steuerungseinrichtung passt den mindestens einen Steuerungsparameter während des Bearbeitens des Werkstücks in Abhängigkeit von einer momentanen Masse des Werkstücks und/oder in Abhängigkeit von einem momentanen Trägheitsmoment des Werkstücks an. Die momentane Masse des Werkstücks und/oder das momentane Trägheitsmoment des Werkstücks werden anhand des geometrischen Modells bestimmt, wobei das Bestimmen der momentanen Masse des Werkstücks und/oder des momentanen Trägheitsmoments des Werkstücks in Abhängigkeit von einer Dichte des Werkstücks sowie von einer momentanen Form des Werkstücks erfolgt, wobei die momentane Form des Werkstücks anhand eines geometrischen Modells des Werkstücks ermittelt wird und wobei das geometrische Modell anhand einer Bearbeitungssimulation aktualisiert wird.

Indem stets die momentane Masse des Werkstücks und/oder das momentane Trägheitsmoment des Werkstücks berücksichtigt werden, um den mindestens einen Steuerungsparameter anzupassen, kann die Bearbeitungsmaschine am Limit betrieben werden, ohne Gefahr zu laufen, Beschädigungen an der Maschine oder am Werkstück hervorzurufen. Im Unterschied zu einem defensiven Verfahren, bei welchem die schwerste bzw. leichteste Masse herangezogen wird, erlaubt eine dynamische Anpassung der Steuerungsparameter in Abhängigkeit von dem momentanen Trägheitsmoment des Werkstücks und/oder der momentanen Masse des Werkstücks eine deutlich effizientere und bessere Ausnutzung der Kapazitäten der Bearbeitungsmaschine. Die Bearbeitung kann dadurch schneller erfolgen.

Weiter kann auch die Präzision der Bearbeitung des Werkstücks erhöht werden, indem die Arbeitsweise der Bearbeitungsmaschine stets dynamisch an die momentanen Werte von Masse und/oder Trägheitsmoment des Werkstücks angepasst werden. Insbesondere bei Werkstücken, bei welchen hohe Präzision in der Herstellung erforderlich ist, etwa bei sicherheitsrelevanten Komponenten, ist dies von großem Vorteil.

Mit dem erfindungsgemäßen Verfahren kann die Steuerung somit optimal betrieben werden, da die Masse bzw. das Trägheitsmoment vom Bearbeitungsfortschritt abhängig sind und die Steuerungsparameter entsprechend adaptiert werden. Damit operiert die Bearbeitungsmaschine stets mit der bestmöglichen Steuerungsdynamik bzw. Regelungsdynamik.

Um momentane Werte für die Masse bzw. das Trägheitsmoment des Werkstücks zu erhalten, wird ein geometrisches Modell verwendet. Unter einem "geometrischen Modell" ist zu verstehen, dass die Geometrie des Werkstücks modelliert wird, d.h. dass die geometrischen Abmessungen des Werkstücks modelliert werden. Insbesondere kann die Kontur des Werkstücks durch das geometrische Modell beschrieben werden. Bei konstanter Dichte kann durch Multiplikation mit dem Volumen des Werkstücks, welches durch das geometrische Modell festgelegt ist, die Masse des Werkstücks bestimmt werden. Das Volumen des Werkstücks kann anhand des geometrischen Modells beispielsweise durch numerische Integration oder mittels Zerlegung des Volumens in primitive geometrische Objekte (Quader, Simplizes oder dergleichen) erfolgen. Genauso kann durch die bekannten physikalischen Beziehungen anhand von Dichte und geometrischen Abmessungen das Trägheitsmoment des Werkstücks berechnet werden.

Sowohl die momentane Masse des Werkstücks als auch das momentane Drehmoment des Werkstücks können zum Anpassen des mindestens einen Steuerungsparameters herangezogen werden.

Je nach Art der Bearbeitung des Werkstücks kann auch nur die momentane Masse des Werkstücks zum Anpassen des mindestens einen Steuerungsparameters berücksichtigt werden, etwa bei prismatischer Bearbeitung oder beim Fräsen.

Weiter kann auch nur das momentane Drehmoment zum Anpassen des mindestens einen Steuerungsparameters berücksichtigt werden, etwa bei einer Drehmaschine.

Es kann auch vorgesehen sein, während bestimmten Verarbeitungsschritten ausschließlich die Masse des Werkstücks oder ausschließlich das Drehmoment des Werkstücks zu berücksichtigen. Während weiterer Verarbeitungsschritte können sowohl die Masse als auch das Drehmoment des Werkstücks berücksichtigt werden.

Gemäß einer weiteren Ausführungsform des Verfahrens wird ein digitaler Zwilling des Werkstücks erzeugt, welcher insbesondere das geometrische Modell umfasst. Der digitale Zwilling kann zusätzlich Informationen über einen Materialabtrag oder eine Veränderung der Form des Werkstücks umfassen.

Gemäß einer weiteren Ausführungsform des Verfahrens zum Bearbeiten eines Werkstücks kann das geometrische Modell auch Informationen über die Dichteverteilung des Materials des Werkstücks umfassen. Insbesondere bei inhomogenen Werkstücken können dadurch die Masse bzw. das Trägheitsmoment des Werkstücks ermittelt werden.

Gemäß einer weiteren Ausführungsform des Verfahrens zum Bearbeiten eines Werkstücks kann die Dichteverteilung des Materials des Werkstücks auch zeitabhängig sein, d. h. von dem momentanen Bearbeitungsschritt abhängen. Die Dichteverteilung kann sich somit während des Bearbeitens des Werkstücks verändern. Dies ist insbesondere vorteilhaft bei chemischen Umwandlungsprozessen, bei einer Bearbeitung des Werkstücks mittels Temperaturänderung oder bei einem Beaufschlagen des Werkstücks mit hohem Druck, wobei sich die Dichte des Werkstücks zumindest lokal ändern kann.

Die Bearbeitungsmaschine kann eine Werkzeugmaschine, eine Produktionsmaschine oder ein Industrieroboter sein.

Gemäß einer weiteren Ausführungsform des Verfahrens zum Bearbeiten eines Werkstücks wird das geometrische Modell des zu bearbeitenden Werkstücks während des Bearbeitens des Werkstücks angepasst. Hierzu kann ein Fortschrittsparameter berücksichtigt werden, welcher den Fortschritt der Bearbeitung des Werkstücks anzeigt. Dieser kann von der Bearbeitungsmaschine selbst ausgegeben werden. Das geometrische Modell kann von dem Fortschrittsparameter abhängen. Der Fortschrittsparameter kann diskrete Werte annehmen und sich etwa für verschiedene Phasen der Verarbeitung unterscheiden. Zu Beginn jeder neuen Phase wird das geometrische Modell angepasst. Im Allgemeinen kann das geometrische Modell stufenweise oder auch kontinuierlich angepasst werden.

Gemäß einer weiteren Ausführungsform des Verfahrens zum Bearbeiten eines Werkstücks wird das Werkstück während des Bearbeitens mittels mindestens eines Sensors vermessen. Das geometrische Modell des zu bearbeitenden Werkstücks wird unter Verwendung des Messergebnisses des mindestens einen Sensors angepasst. Indem die Masse des Werkstücks und/oder das Trägheitsmoment des Werkstücks anhand des geometrischen Modells bestimmt wird, ändern sich Masse und/oder Trägheitsmoment aufgrund der Anpassung des geometrischen Modells. Masse und/oder Trägheitsmoments des Werkstücks sind somit zeitabhängig, wobei die Zeitabhängigkeit durch die Anpassung bzw. Veränderung des geometrischen Modells vorgegeben ist.

Gemäß einer weiteren Ausführungsform des Verfahrens zum Bearbeiten eines Werkstücks umfasst der mindestens eine Sensor einen optischen Sensor. Insbesondere kann es sich bei dem optischen Sensor um einen Positionssensor, einen Scanner und/oder eine 3D-Kamera handeln. Mittels Scanner oder 3D-Kamera kann beispielsweise die momentane Geometrie des Werkstücks ermittelt werden, um das geometrische Modell anzupassen.

Gemäß einer weiteren Ausführungsform des Verfahrens zum Bearbeiten eines Werkstücks wird das Bearbeiten des Werkstücks vorab simuliert, um eine Veränderung des geometrischen Modells während des Bearbeitens des Werkstücks zu berechnen. Die simulierte Veränderung des Werkstücks wird dann während des tatsächlichen Bearbeitens des Werkstücks zur Bestimmung der momentanen Masse bzw. des momentanen Trägheitsmoments herangezogen.

Gemäß einer weiteren Ausführungsform des Verfahrens zum Bearbeiten eines Werkstücks werden die vorab berechnete Veränderung der Masse des Werkstücks und/oder des Trägheitsmoments des Werkstücks in einer Look-up-Tabelle gespeichert.

Gemäß einer weiteren Ausführungsform des Verfahrens zum Bearbeiten eines Werkstücks umfasst das Bearbeiten des Werkstücks mittels einer Bearbeitungsmaschine ein additives Fertigungsverfahren.

Gemäß einer weiteren Ausführungsform des Verfahrens zum Bearbeiten eines Werkstücks umfasst das Bearbeiten des Werkstücks mittels einer Bearbeitungsmaschine eine trennende Bearbeitung des Werkstücks. Eine trennende Bearbeitung umfasst insbesondere eine spanende Bearbeitung des Werkstücks und/oder ein Zerteilen des Werkstücks, insbesondere mittels Stanzen, Laserschneiden und dergleichen. Weiter oder alternativ kann die trennende Bearbeitung des Werkstücks mindestens eines von einem Abtragen, einem Zerlegen und/oder einem Reinigen des Werkstücks umfassen.

Gemäß einer weiteren Ausführungsform des Verfahrens zum Bearbeiten eines Werkstücks umfasst der mindestens eine Steuerungsparameter, welcher während des Bearbeitens der Bearbeitungsmaschine angepasst wird, einen Parameter für Bewegungsführung von Komponenten der Bearbeitungsmaschine. Hierunter kann die relative Bewegung der Bearbeitungsmaschine zum Werkstück verstanden werden.

Gemäß einer weiteren Ausführungsform des Verfahrens zum Bearbeiten eines Werkstücks umfasst der mindestens eine Steuerungsparameter, welcher während des Bearbeitens der Bearbeitungsmaschine angepasst wird, einen Regelungsparameter, insbesondere eine Vorsteuerung und/oder einen Filter und/oder eine Reglerverstärkung. Die Vorsteuerung kann sich Beispielweise auf mindestens eine Kraft, mindestens ein Drehmoment oder dergleichen beziehen, welche bei dem Bearbeiten des Werkstücks auftreten.

Gemäß einer weiteren Ausführungsform des Verfahrens zum Bearbeiten eines Werkstücks werden beim Anpassen des mindestens einen Steuerungsparameters eine maximale Beschleunigung und/oder Drehbeschleunigung des Werkstücks und/oder von Komponenten der Bearbeitungsmaschine berücksichtigt, welche in Abhängigkeit von der momentanen Masse des Werkstücks und/oder in Abhängigkeit von dem momentanen Trägheitsmoment des Werkstücks berechnet werden. Die maximale Beschleunigung kann möglichst nahe an einer Obergrenze des zulässigen Bereichs in Abhängigkeit von der jeweiligen Bearbeitungsmaschine gewählt werden.

Bei dem erfindungsgemäßen Verfahren zum Bearbeiten eines Werkstücks erfolgt das Bestimmen der momentanen Masse des Werkstücks und/oder des momentanen Trägheitsmoments des Werkstücks in Abhängigkeit von einer Dichte des Werkstücks sowie von einer momentanen Form des Werkstücks, wobei die momentane Form des Werkstücks anhand des geometrischen Modells des Werkstücks ermittelt wird.

Gemäß einer weiteren Ausführungsform umfasst die Vorrichtung zum Bearbeiten eines Werkstücks mindestens einen Sensor zum Vermessen des Werkstücks während des Bearbeitens, wobei die Steuerungseinrichtung dazu ausgebildet ist, ein Messergebnis des mindestens einen Sensors zum Ermitteln der momentanen Masse des Werkstücks und/oder des momentanen Trägheitsmoments des Werkstücks heranzuziehen.

Gemäß einer weiteren Ausführungsform der Vorrichtung zum Bearbeiten eines Werkstücks umfasst der mindestens eine Sensor einen Positionssensor, einen Scanner und/oder eine 3D-Kamera.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Es zeigen:
- Fig. 1: ein schematisches Blockdiagramm einer Vorrichtung zum Bearbeiten eines Werkstücks gemäß einer Ausführungsform der Erfindung; und
- Fig. 2: ein Flussdiagramm eines Verfahrens zum Bearbeiten eines Werkstücks gemäß einer Ausführungsform der Erfindung.

### Detaillierte Figurenbeschreibung

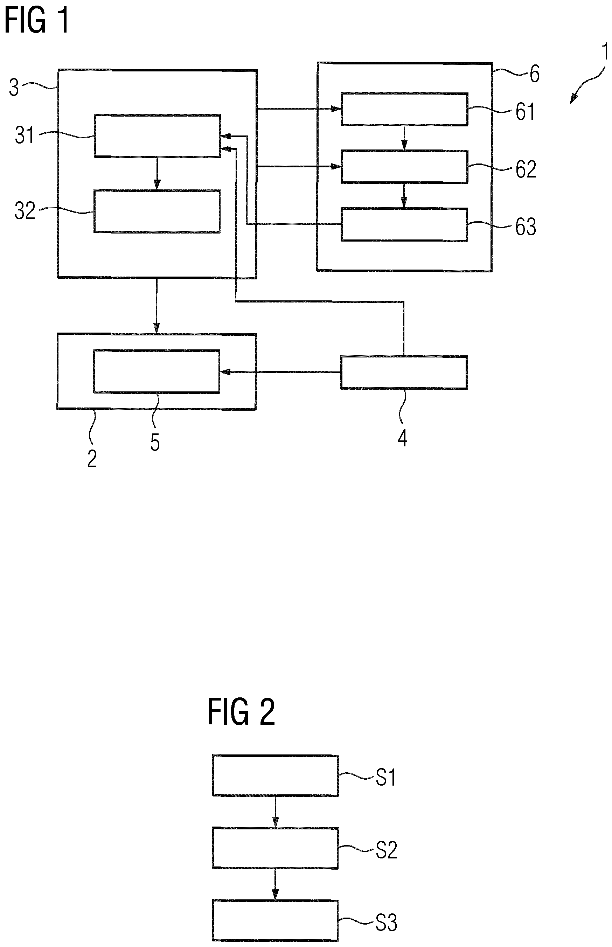

Fig. 1 zeigt ein schematisches Blockdiagramm einer Vorrichtung 1 zum Bearbeiten eines Werkstücks 5. Die Vorrichtung umfasst eine Bearbeitungsmaschine 2, insbesondere für eine trennende Bearbeitung des Werkstücks 5. Alternativ oder zusätzlich kann die Bearbeitungsmaschine 2 auch eine additive Fertigung durchführen. Die Bearbeitungsmaschine 2 kann auch mehrere Verfahrensschritte durchführen oder aus mehreren Teilmaschinen bestehen.

Weiter umfasst die Vorrichtung 1 einen Speicher 6, in welchem ein digitaler Zwilling der Bearbeitungsmaschine 2 abgelegt ist. Der Speicher 6 ist mit einer Steuerungseinrichtung 3 gekoppelt, welche die Bearbeitungsmaschine 2 während des Bearbeitens des Werkstücks 5 mittels eines oder mittels mehrerer Steuerungsparameter ansteuert. Der Steuerungsparameter kann beispielsweise einen Parameter für die Bewegungsführung von Komponenten der Bearbeitungsmaschine 2 umfassen. Die Steuerungsparameter kann auch zusätzlich oder alternativ einen Regelungsparameter umfassen. Insbesondere kann hierdurch eine Vorsteuerung, ein Filter oder eine Reglerverstärkung bereitgestellt werden.

Die Steuerungseinrichtung 3 kann mindestens eine Recheneinrichtung umfassen, welche die in dem digitalen Zwilling gespeicherten Informationen ausliest und verarbeitet, um die Steuerungsparameter zu berechnen und dynamisch anzupassen. Die Recheneinrichtung kann Software- und/oder Hardwarekomponenten umfassen, etwa CPUs, GPUs, Mikrokontroller, integrierte Schaltkreise oder dergleichen. Der Speicher 6 kann ein flüchtiger oder nicht-flüchtiger Speicher sein, etwa eine Festplatte, eine Speicherkarte oder dergleichen.

Der digitale Zwilling umfasst ein geometrisches Modell 61 des zu bearbeitenden Werkstücks 5. Das geometrische Modell 61 beschreibt die dreidimensionale Form des zu bearbeitenden Werkstücks 5. Zusätzlich kann das geometrische Modell 61 Informationen über eine Dichte des Werkstücks 5, die Dichteverteilung des Werkstücks 5, Materialien des Werkstücks 5 oder dergleichen umfassen.

Weiter umfasst der geometrische Zwilling Informationen 62 bezüglich einer Anpassung beziehungsweise Änderung des geometrischen Modells 61, d. h. insbesondere eine Änderung der Masse, etwa durch Materialabtrag, oder eine Änderung der geometrischen Form während der Bearbeitung des Werkstücks 5. Schließlich umfasst der geometrische Zwillings Informationen 63 zur Bestimmung von Trägheitsinformationen, d. h. der Masse des Werkstücks 5 und/oder des Trägheitsmoments des Werkstücks 5.

Die Steuerungseinrichtung 3 passt den mindestens einen Steuerungsparameter während des Bearbeitens des Werkstücks 5 in Abhängigkeit von einer momentanen Masse des Werkstücks 5 und/oder in Abhängigkeit von einem momentanen Trägheitsmoment des Werkstücks 5 an. Die Steuerungseinrichtung 3 umfasst hierzu eine Trägheitsbestimmungseinrichtung 31, welche anhand der Informationen 63 zur Bestimmung von Trägheitsinformationen und anhand von Informationen bezüglich eines momentanen Fortschritts der Bearbeitung die momentane Masse des Werkstücks 5 und/oder das momentane Trägheitsmoment des Werkstücks 5 berechnet.

Weiter umfasst die Steuerungseinrichtung 3 eine Parameterberechnungseinrichtung 32, welche momentane Werte des mindestens einen Steuerungsparameters in Abhängigkeit von der momentanen Masse des Werkstücks 5 und/oder des momentanen Trägheitsmoments des Werkstücks 5 bestimmt. Hierbei kann die Parameterberechnungseinrichtung 32 auf eine auf dem Speicher 6 abgelegte Look-Up-Tabelle zugreifen, welche in Abhängigkeit von der momentanen Masse des Werkstücks 5 und/oder von dem momentanen Trägheitsmoment des Werkstücks 5 entsprechende Werte für die Steuerungsparameter angibt. Der mindestens eine Steuerungsparameter kann auch als Funktion der Masse des Werkstücks 5 und/oder des momentanen Trägheitsmoments des Werkstücks 5 vorgegeben sein, wobei die Parameterberechnungseinrichtung 32 durch Einsetzen der ermittelten Werte für die momentane Masse des Werkstücks 5 bzw. für das momentane Trägheitsmoment des Werkstücks 5 den entsprechenden Wert für den jeweiligen mindestens einen Steuerungsparameter berechnet.

Die Ermittlung der momentanen Masse des Werkstücks 5 oder des momentanen Trägheitsmoments des Werkstücks 5 kann online oder offline erfolgen.

Bei einer Online-Bestimmung kann die Simulation des Materialabtrags oder des hinzukommenden Materials zeitparallel zur Bearbeitung des Werkstücks 5 durch die Bearbeitungsmaschine 2 erfolgen. Die Berechnung kann durch die Steuerungseinrichtung 3 oder durch einen gekoppelten Rechner, z.B. ein Edge-Gerät, durchgeführt werden.

Bei einer Offline-Bestimmung kann die Simulation der Veränderung des Werkstücks 5, d. h. beispielsweise des Materialabtrags, bereits vor dem Beginn der Bearbeitung des Werkstücks 5 vollständig durchgeführt werden. Die zeitabhängigen bzw. bearbeitungsabhängigen Werte für die Masse bzw. das Trägheitsmoment werden als Zusatzinformationen hingelegt und während der Bearbeitung des Werkstücks 5 durch die Bearbeitungsmaschine 2 von der Steuerungseinrichtung 3 abgerufen. Die berechneten Werte für die Masse des Werkstücks 5 und/oder das Trägheitsmoment des Werkstücks 5 können hierzu in einer Look-Up-Tabelle auf dem Speicher 6 abgelegt werden.

Zum Berechnen der Masse bzw. des Trägheitsmoments des Werkstücks 5 aus dem geometrischen Modell 61 können Volumen des Werkstücks 5 und Dichte des Werkstücks 5 berechnet werden. Indem das geometrische Modell 61 mit dem Fortschritt der Bearbeitungssimulation aktualisiert wird, kann daraus laufend die aktuelle Masse des Werkstücks 5 bzw. das aktuelle Trägheitsmoment des Werkstücks 5 berechnet werden. Dadurch steht immer ein aktuell gültiger Wert zur Verfügung.

Beim Anpassen des mindestens einen Steuerungsparameters können eine maximale Beschleunigung und/oder eine maximale Drehbeschleunigung des Werkstücks 5 und/oder von Komponenten der Bearbeitungsmaschine 2 berücksichtigt werden. Diese können in Abhängigkeit von der momentanen Masse des Werkstücks 5 und/oder in Abhängigkeit von dem momentanen Trägheitsmoment des Werkstücks 5 berechnet werden.

Weiter kann das Bestimmen der momentanen Masse des Werkstücks 5 und/oder des momentanen Trägheitsmoments des Werkstücks 5 in Abhängigkeit von einer Dichte des Werkstücks 5 sowie von einer momentanen Form des Werkstücks 5 erfolgen, wobei die momentane Form des Werkstücks 5 anhand des geometrischen Modells des Werkstücks 5 ermittelt wird.

Optional umfasst die Vorrichtung 1 zum Bearbeiten des Werkstücks 5 mindestens einen Sensor 4, insbesondere einen optischen Sensor, wie einen Positionssensor, einen Scanner und/oder eine 3D-Kamera. Der mindestens eine Sensor 4 umfasst kontinuierlich oder zu vorgegebenen Zeitpunkten Messwerte bezüglich des zu bearbeitenden Werkstücks 5. In Abhängigkeit von den Messwerten kann das geometrische Modell 61 des zu bearbeitenden Werkstücks 5 angepasst werden.

Die Erfindung ist nicht auf die gezeigten Ausführungsformen beschränkt. Beispielweise handelt es sich bei der Bearbeitungsmaschine 2 um eine CNC (englisch: Computerized Numerical Control)-Maschine. Die Berechnung kann auf der CNC-Maschine selbst durchgeführt werden, d. h. die Steuerungseinrichtung 3 sowie der Speicher 6 können Teil der Bearbeitungsmaschine 2 sein.

Fig. 2 zeigt ein Flussdiagramm eines Verfahrens zum Bearbeiten eines Werkstücks 5. Das Verfahren kann mittels einer oben beschriebenen Vorrichtung 1 durchgeführt werden. Umgekehrt kann die oben beschriebenen Vorrichtung 1 dazu ausgebildet sein, einen der im Folgenden beschriebenen Verfahrensschritte durchzuführen.

In einem ersten Verfahrensschritt S1 wird ein geometrisches Modells 61 des zu bearbeitenden Werkstücks 5 bereitgestellt. Insbesondere kann lediglich ein Anfangswert des geometrischen Modells 61 bereitgestellt werden. Es kann jedoch auch vorgesehen sein, bereits den kompletten zeitlichen Verlauf des geometrischen Modells 61 in Abhängigkeit von dem momentanen Bearbeitungsfortschritt bereitzustellen. Hierzu kann die Abhängigkeit des geometrischen Modells von dem jeweiligen Bearbeitungsschritt bzw. von der Bearbeitungszeit in einer Look-up-Tabelle bereitgestellt werden. Das Bearbeiten des Werkstücks kann hierzu vorab simuliert werden, um die Veränderung des geometrischen Modells während des Bearbeitens des Werkstücks zu berechnen.

In einem Verfahrensschritt S2 wird das Werkstück mittels einer Bearbeitungsmaschine 2 bearbeitet, wobei die Bearbeitungsmaschine 2 mittels mindestens eines Steuerungsparameters gesteuert wird. Die Bearbeitung kann eine trennende Bearbeitung und/oder eine additive Bearbeitung umfassen.

In einem Verfahrensschritt S3 wird der mindestens eine Steuerungsparameter während des Bearbeitens des Werkstücks 5 in Abhängigkeit von einer momentanen Masse des Werkstücks 5 und/oder in Abhängigkeit von einem momentanen Trägheitsmoment des Werkstücks 5 angepasst. Hierbei werden die momentane Masse des Werkstücks 5 und/oder das momentane Trägheitsmoment des Werkstücks 5 anhand des geometrischen Modells 61 bestimmt.

Die anzupassenden Steuerungsparameter können einen Parameter für die Bewegungsführung von Komponenten der Bearbeitungsmaschine 2 umfassen. Weiter können auch Regelungsparameter angepasst werden.

Das Werkstück 5 kann auch mittels Sensoren 4 vermessen werden, um die Veränderung der momentanen Form des Werkstücks 5 zu ermitteln und das geometrische Modell 61 entsprechend anzupassen bzw. upzudaten.

## Patentansprüche

1. Verfahren zum Bearbeiten eines Werkstücks (5), mit den Schritten:
Bereitstellen (S1) eines geometrischen Modells (61) des zu bearbeitenden Werkstücks (5);
Bearbeiten (S2) des Werkstücks (5) mittels einer Bearbeitungsmaschine (2), wobei die Bearbeitungsmaschine (2) mittels mindestens eines Steuerungsparameters gesteuert wird; und
Anpassen (S3) des mindestens einen Steuerungsparameters während des Bearbeitens des Werkstücks (5) in Abhängigkeit von einer momentanen Masse des Werkstücks (5) und/oder in Abhängigkeit von einem momentanen Trägheitsmoment des Werkstücks (5), wobei die momentane Masse des Werkstücks (5) und/oder das momentane Trägheitsmoment des Werkstücks (5) vom Bearbeitungsfortschritt abhängig sind und anhand des geometrischen Modells (61) bestimmt werden,
**dadurch gekennzeichnet, dass**
das Bestimmen der momentanen Masse des Werkstücks (5) und/oder des momentanen Trägheitsmoments des Werkstücks (5) in Abhängigkeit von einer Dichte des Werkstücks (5) sowie von einer momentanen Form des Werkstücks (5) erfolgt, wobei die momentane Form des Werkstücks (5) anhand des geometrischen Modells (61) des Werkstücks (5) ermittelt wird und wobei das geometrische Modell (61) anhand einer Bearbeitungssimulation aktualisiert wird.

2. Verfahren nach Anspruch 1, wobei das geometrische Modell (61) des zu bearbeitenden Werkstücks (5) während des Bearbeitens des Werkstücks (5) angepasst wird.

3. Verfahren nach Anspruch 2, wobei das Werkstück (5) während des Bearbeitens mittels mindestens eines Sensors (4) vermessen wird, und wobei das geometrische Modell (61) des zu bearbeitenden Werkstücks (5) unter Verwendung des Messergebnisses des mindestens einen Sensors (4) angepasst wird.

4. Verfahren nach Anspruch 3, wobei der mindestens eine Sensor (4) einen Positionssensor, einen Scanner und/oder eine 3D-Kamera umfasst.

5. Verfahren nach Anspruch 1, wobei das Bearbeiten des Werkstücks (5) vorab simuliert wird, um eine Veränderung des geometrischen Modells (61) während des Bearbeitens des Werkstücks (5) zu berechnen.

6. Verfahren nach Anspruch 5, wobei die vorab berechnete Veränderung der Masse des Werkstücks (5) und/oder des Trägheitsmoments des Werkstücks (5) in einer Look-up-Tabelle gespeichert werden.

7. Verfahren nach einem der vorangehenden Ansprüche, wobei das Bearbeiten des Werkstücks (5) mittels einer Bearbeitungsmaschine (2) ein additives Fertigungsverfahren umfasst.

8. Verfahren nach einem der vorangehenden Ansprüche, wobei Bearbeiten des Werkstücks (5) mittels einer Bearbeitungsmaschine (2) eine trennende Bearbeitung des Werkstücks (5) umfasst.

9. Verfahren nach einem der vorangehenden Ansprüche, wobei der mindestens eine Steuerungsparameter, welcher während des Bearbeitens der Bearbeitungsmaschine (2) angepasst wird, einen Parameter für Bewegungsführung von Komponenten der Bearbeitungsmaschine (2) umfasst.

10. Verfahren nach einem der vorangehenden Ansprüche, wobei der mindestens eine Steuerungsparameter, welcher während des Bearbeitens der Bearbeitungsmaschine (2) angepasst wird, einen Regelungsparameter, insbesondere eine Vorsteuerung und/oder einen Filter und/oder eine Reglerverstärkung umfasst.

11. Verfahren nach einem der vorangehenden Ansprüche, wobei beim Anpassen des mindestens einen Steuerungsparameters eine maximale Beschleunigung und/oder Drehbeschleunigung des Werkstücks (5) und/oder von Komponenten der Bearbeitungsmaschine (2) berücksichtigt werden, welche in Abhängigkeit von der momentanen Masse des Werkstücks (5) und/oder in Abhängigkeit von dem momentanen Trägheitsmoment des Werkstücks (5) berechnet werden.

12. Vorrichtung (1) zum Bearbeiten eines Werkstücks (5), mit:
einer Bearbeitungsmaschine (2), welche dazu ausgebildet ist, das Werkstück (5) zu bearbeiten; und
einer Steuerungseinrichtung (3), welche dazu ausgebildet ist, die Bearbeitungsmaschine (2) zum Bearbeiten des Werkstücks (5) mittels mindestens eines Steuerungsparameters zu steuern; wobei die Steuerungseinrichtung (3) dazu ausgebildet ist, den mindestens einen Steuerungsparameter während des Bearbeitens des Werkstücks (5) in Abhängigkeit von einer momentanen Masse des Werkstücks (5) und/oder in Abhängigkeit von einem momentanen Trägheitsmoment des Werkstücks (5) anzupassen, wobei die momentane Masse des Werkstücks (5) und/oder das momentane Trägheitsmoment des Werkstücks (5) vom Bearbeitungsfortschritt abhängig sind und anhand des geometrischen Modells (61) bestimmt werden, **dadurch gekennzeichnet, dass**
das Bestimmen der momentanen Masse des Werkstücks (5) und/oder des momentanen Trägheitsmoments des Werkstücks (5) in Abhängigkeit von einer Dichte des Werkstücks (5) sowie von einer momentanen Form des Werkstücks (5) erfolgt, wobei die momentane Form des Werkstücks (5) anhand eines geometrischen Modells (61) des Werkstücks (5) ermittelt wird und wobei das geometrische Modell (61) anhand einer Bearbeitungssimulation aktualisiert wird.

13. Vorrichtung (1) nach Anspruch 12, weiter mit mindestens einem Sensor (4) zum Vermessen des Werkstücks (5) während des Bearbeitens, wobei die Steuerungseinrichtung (3) dazu ausgebildet ist, ein Messergebnis des mindestens einen Sensors (4) zum Ermitteln der momentanen Masse des Werkstücks (5) und/oder des momentanen Trägheitsmoments des Werkstücks (5) heranzuziehen.

14. Vorrichtung (1) nach Anspruch 13, wobei der mindestens eine Sensor (4) einen Positionssensor (4), einen Scanner und/oder eine 3D-Kamera umfasst.

## Claims

1. Method for machining a workpiece (5), having the steps:
providing (S1) a geometric model (61) of the workpiece to be machined (5);
machining (S2) the workpiece (5) by means of a machining system (2), wherein the machining system (2) is controlled by means of at least one control parameter; and
adapting (S3) the at least one control parameter during the machining of the workpiece (5) on the basis of the instantaneous mass of the workpiece (5) and/or on the basis of the instantaneous moment of inertia of the workpiece (5), wherein the instantaneous mass of the workpiece (5) and/or the instantaneous moment of inertia of the workpiece (5) are dependent on the machining progress and are ascertained with reference to the geometric model (61),
**characterised in that**
the instantaneous mass of the workpiece (5) and/or the instantaneous moment of inertia of the workpiece (5) is ascertained on the basis of a density of the workpiece (5) and an instantaneous shape of the workpiece (5), wherein the instantaneous shape of the workpiece (5) is determined with reference to the geometric model (61) of the workpiece (5) and wherein the geometric model (61) is updated with reference to a machining simulation.

2. Method according to claim 1, wherein the geometric model (61) of the workpiece to be machined (5) is adapted during the machining of the workpiece (5).

3. Method according to claim 2, wherein the workpiece (5) is measured during the machining by means of at least one sensor (4), and wherein the geometric model (61) of the workpiece to be machined (5) is adapted using the measurement result of the at least one sensor (4).

4. Method according to claim 3, wherein the at least one sensor (4) comprises a position sensor, a scanner and/or a 3D camera.

5. Method according to claim 1, wherein the machining of the workpiece (5) is simulated in advance, in order to calculate a change of the geometric model (61) during the machining of the workpiece (5).

6. Method according to claim 5, wherein the precalculated change of the mass of the workpiece (5) and/or of the moment of inertia of the workpiece (5) is stored in a look-up table.

7. Method according to one of the preceding claims, wherein the machining of the workpiece (5) by means of a machining system (2) comprises an additive manufacturing process.

8. Method according to one of the preceding claims, wherein machining of the workpiece (5) by means of a machining system (2) comprises separative machining of the workpiece (5).

9. Method according to one of the preceding claims, wherein the at least one control parameter which is adapted during the machining that is done by the machining system (2) comprises a parameter for motion guidance of components of the machining system (2).

10. Method according to one of the preceding claims, wherein the at least one control parameter which is adapted during the machining that is done by the machining system (2) comprises a closed-loop control parameter, in particular a precontrol and/or a filter and/or controller gain.

11. Method according to one of the preceding claims, wherein a maximum acceleration and/or rotational acceleration of the workpiece (5) and/or of components of the machining system (2), these being calculated on the basis of the instantaneous mass of the workpiece (5) and/or on the basis of the instantaneous moment of inertia of the workpiece (5), are taken into account when adapting the at least one control parameter.

12. Device (1) for machining a workpiece (5), comprising:
a machining system (2) which is designed to machine the workpiece (5); and
a control facility (3) which is designed to control the machining system (2) for the purpose of machining the workpiece (5) by means of at least one control parameter;
wherein the control facility (3) is designed to adapt the at least one control parameter during the machining of the workpiece (5) on the basis of the instantaneous mass of the workpiece (5) and/or on the basis of the instantaneous moment of inertia of the workpiece (5), wherein the instantaneous mass of the workpiece (5) and/or the instantaneous moment of inertia of the workpiece (5) are dependent on the machining progress and are ascertained with reference to the geometric model (61), **characterised in that**
the instantaneous mass of the workpiece (5) and/or the instantaneous moment of inertia of the workpiece (5) are ascertained on the basis of a density of the workpiece (5) and an instantaneous shape of the workpiece (5), wherein the instantaneous shape of the workpiece (5) is determined with reference to a geometric model (61) of the workpiece (5) and wherein the geometric model (61) is updated with reference to a machining simulation.

13. Device (1) according to claim 12, further comprising at least one sensor (4) for measuring the workpiece (5) during the machining, wherein the control facility (3) is designed to use a measurement result of the at least one sensor (4) for the purpose of determining the instantaneous mass of the workpiece (5) and/or the instantaneous moment of inertia of the workpiece (5).

14. Device (1) according to claim 13, wherein the at least one sensor (4) comprises a position sensor (4), a scanner and/or a 3D camera.

## Revendications

1. Procédé d'usinage d'une pièce (5), comprenant les stades :
se procurer (S1) un modèle (61) géométrique de la pièce (5) à usiner ;
usiner (S2) la pièce (5) au moyen d'une machine (2) d'usinage, dans lequel on commande la machine (2) d'usinage au moyen d'au moins un paramètre de commande ; et
adapter (S3) le au moins un paramètre de commande pendant l'usinage de la pièce (5) en fonction d'une masse instantanée de la pièce (5) et/ou en fonction d'un moment d'inertie instantané de la pièce (5), dans lequel la masse instantanée de la pièce (5) et/ou le moment d'inertie instantané de la pièce (5) dépendent de la progression de l'usinage et sont déterminés à l'aide du modèle (61) géométrique ,
**caractérisé en ce que**
la détermination de la masse instantanée de la pièce (5) et/ou du moment d'inertie instantané de la pièce (5) s'effectue en fonction d'une masse volumique de la pièce (5) ainsi que d'une forme instantanée de la pièce (5), dans lequel on détermine la forme instantanée de la pièce (5) à l'aide du modèle (61) géométrique de la pièce (5) et dans lequel on met à jour le modèle (61) géométrique à l'aide d'une simulation d'usinage.

2. Procédé suivant la revendication 1, dans lequel on adapte le modèle (61) géométrique de la pièce (5) à usiner pendant l'usinage de la pièce (5).

3. Procédé suivant la revendication 2, dans lequel on mesure, au moyen d'un capteur (4), la pièce (5) pendant l'usinage, et dans lequel on adapte le modèle (61) géométrique de la pièce (5) à usiner en utilisant le résultat de mesure du au moins un capteur (4) .

4. Procédé suivant la revendication 3, dans lequel le au moins un capteur (4) comprend un capteur de position, un scanner et/ou une caméra en 3D.

5. Procédé suivant la revendication 1, dans lequel on simule l'usinage de la pièce (5) à l'avance, afin de calculer une modification du modèle (61) géométrique pendant l'usinage de la pièce (5).

6. Procédé suivant la revendication 5, dans lequel on met la modification calculée à l'avance de la masse de la pièce (5) et/ou du moment d'inertie de la pièce (5) en mémoire dans une table de consultation.

7. Procédé suivant l'une des revendications précédentes, dans lequel l'usinage de la pièce (5) comprend un procédé de fabrication additif au moyen d'une machine (2) d'usinage.

8. Procédé suivant l'une des revendications précédentes, dans lequel usiner la pièce (5) au moyen d'une machine (2) d'usinage comprend un usinage à séparation de la pièce (5).

9. Procédé suivant l'une des revendications précédentes, dans lequel le au moins un paramètre de commande, que l'on adapte pendant l'usinage de la machine (2) d'usinage, comprend un paramètre pour guider le déplacement d'éléments de la machine (2) d'usinage.

10. Procédé suivant l'une des revendications précédentes, dans lequel le au moins un paramètre de commande, que l'on adapte pendant l'usinage de la machine (2) d'usinage, comprend un paramètre de régulation, en particulier un pilotage et/ou un filtre et/ou un amplificateur de réglage.

11. Procédé suivant l'une des revendications précédentes, dans lequel, lors de l'adaptation du au moins un paramètre de commande, on prend en compte une accélération maximum et/ou une accélération en rotation de la pièce (5) et/ou d'éléments de la machine (2) d'usinage, que l'on calcule en fonction de la masse instantanée de la pièce (5) et/ou en fonction du moment d'inertie instantané de la pièce (5).

12. Installation (1) d'usinage d'une pièce (5), comprenant :
une machine (2) d'usinage, qui est constituée pour usiner la pièce (5) ; et
un dispositif (3) de commande, qui est constitué pour commander, au moyen d'au moins un paramètre de commande, la machine (2) d'usinage pour l'usinage de la pièce (5), dans laquelle le dispositif (3) de commande est constitué pour adapter le au moins un paramètre de commande pendant l'usinage de la pièce (5) en fonction d'une masse instantanée de la pièce (5) et/ou en fonction d'un moment d'inertie instantané de la pièce (5), dans laquelle la masse instantanée de la pièce (5) et/ou le moment d'inertie instantané de la pièce (5) dépendent de la progression de l'usinage et sont déterminés à l'aide du modèle (61) géométrique, **caractérisée en ce que** la détermination de la masse instantanée de la pièce (5) et/ou du moment d'inertie instantané de la pièce (5) s'effectue en fonction d'une masse volumique de la pièce (5) ainsi que d'une forme instantanée de la pièce (5), dans laquelle on détermine la forme instantanée de la pièce (5) à l'aide d'un modèle (61) géométrique de la pièce (5) et dans laquelle on met à jour le modèle (61) géométrique à l'aide d'une simulation d'usinage.

13. Installation (1) suivant la revendication 12, comprenant en outre au moins un capteur (4) de mesure de la pièce (5) pendant l'usinage, dans laquelle le dispositif (3) de commande est constitué pour tirer parti d'un résultat de mesure d'au moins un capteur (4) pour déterminer la masse instantanée de la pièce (5) et/ou le moment d'inertie instantané de la pièce (5).

14. Installation (1) suivant la revendication 13, dans laquelle le au moins un capteur (4) comprend un capteur (4) de position, un scanner et/ou un appareil photographique en 3D.
